# EUROPÄISCHE PATENTSCHRIFT

(11) **EP 0 309 665 B1**
(45) Veröffentlichungstag und Bekanntmachung des Hinweises auf die Patenterteilung: **09.06.1993**
(21) Anmeldenummer: 88111240.3
(22) Anmeldetag: 13.07.1988
(51) Int. Cl.: B23K 1/00, H05K 13/04

(54) **Lötkopf zum Ein- oder Auslöten von Bauelementen mittels einer Beheizung durch Heissgas, insbesondere für oberflächenmontierbare Bauelemente (SMD)**
Soldering head for soldering and unsoldering components using hot gas, particularly for surface-mounted components (SMD)
Tête de soudage pour le brasage et le débrasage de composants au moyen de gaz chaud, en particulier pour des composants pouvant être montés en surface (SMD)

(30) Priorität: 31.08.1987 DE 3729040
(43) Veröffentlichungstag der Anmeldung: 05.04.1989
(73) Patentinhaber: SIEMENS AKTIENGESELLSCHAFT, 80333 München (DE)
(72) Erfinder: Bunz, Georg, D-8000 München 70 (DE)

(56) Entgegenhaltungen:
- GB-A- 2 154 921
- GB-A- 2 181 981
- US-A- 4 295 596

## Beschreibung

Die Erfindung betrifft einen Lötkopf zum Ein- oder Auslöten von Bauelementen mittels einer Beheizung durch Heißgas, insbesondere für oberflächenmontierbare Bauelemente (SMD).

Bei der Fertigung von elektronischen Flachbaugruppen ist in der letzten Zeit ein Übergang von der herkömmlichen Technik der Einsteckmontage zur Technik der Oberflächenmontage von flach auflötbaren Bauelementen zu verzeichnen. Die hierbei eingesetzten oberflächenmontierbaren Bauelemente (SMD ≙ Surface Mounted Devices) werden durch Bestückautomaten auf den Leiterplatten positioniert, meistens mittels mehrerer Klebstoffpunkte fixiert und anschließend durch ein übliches Lötverfahren verlötet, womit die elektrische Verbindung hergestellt ist. Die bei derartigen Verfahren auftretenden Fehler, sei es durch Einbau falscher oder defekter Bauelemente oder zum Beispiel durch falsche Positionierung, müssen in einem seperaten Verfahren durch Auslöten der entsprechenden Bauelemente und entsprechender Korrektur durch fehlerfreies Einlöten von neuen Bauelementen beseitigt werden. Dies geschieht mittels Vorrichtungen, die man im allgemeinen als Ein- und Auslötmaschinen bezeichnet. Derartige auf dem Markt erhältiche Maschinen müssen einer Vielzahl von Qualitätsanforderungen genügen. So ist es erforderlich, daß der Platz eines defekten Bauelementes, welches ausgelötet und durch fehlerfreies Einlöten eines funktionsfähigen Bauelementes ersetzt werden soll, ohne Behinderungen und ohne Parallaxen-Fehler zu betrachten ist. Des weiteren muß die Heizeinrichtung, mit der die Anschlußbeine des Bauelementes zum Aus- oder Einlöten beheizt werden, eine gleichmäßige Temperaturverteilung über die verschiedenen Anschlußbeine aufweisen und darf zugleich den Körper des Bauelementes nicht zu sehr erhitzen. Ebenso werden hohe Anforderungen an die Ausrichtung des Bauelementes bezüglich der Leiterplatte und des einen Lötplatzes, an die exakte Dosierung von Lotpaste, an die Kühlung des Bauelementes nach dem Einlöten, sowie an die Handhabung eines durch den Bestückautomaten aufgeklebten Bauelementes beim Auslöten in der Ein- oder Auslötmaschine gestellt.

Die britische Patentanmeldung GB-A-2 181 981 beschreibt einen Lötkopf zum Ein- und Auslöten von Bauelementen, wobei mittels erhitzter Luft gelötet wird. Der Lötkopf enthält Mittel zur gleichmäßigen Verteilung und Mischung der erhitzten Luft zur Vermeidung von Temperaturspitzen.

Die britische Patentanmeldung GB-A-2 154 921 offenbart ebenfalls eine Anordnung zum Ein- oder Auslöten von elektronischen Bauelementen. Der Energieträger für die Lötvorgänge ist ebenfalls beheizte Luft, wobei eine Temperaturmessung in einiger Entfernung vom Ort der Lötung vorgenommen wird.

Insbesondere die Forderung nach einer exakten Gleichverteilung der Temperatur an allen gleichzeitig beheizten Anschlußbeinen, um reproduzierbare Beheizungszeiten zu erhalten, wird mit dem bisher Bekannten nicht erreicht.

Der Erfindung liegt die Aufgabe zugrunde, einen Lötkopf zum Ein- und Auslöten von SMD-Bauteilen bereitzustellen, der mit Heißgas lötet, eine gleichmäßige Temperaturverteilung bezogen auf sämtliche gleichzeitig zu verlötenden Anschlußbeinchen gewährleistet und die Temperatur am Ort der Lötung möglichst genau regelt.

Diese Aufgabe wird durch die Merkmale des Anspruches 1 gelöst.

Ein- oder Auslötmaschinen, die eine Temperaturregelung des Heißgases besitzen, werden bereits eingesetzt. Eine zuverlässige Regelung des Lötprozesses ließ sich aber bisher in sofern nicht durchführen, als die Temperaturmessung an irgendeiner Stelle innerhalb des Heißgasstromes nicht mit der Temperatur an den Anschlußbeinen des SMD-Bauelementes, die zudem nicht bei allen Anschlußbeinen gleich war, in unmittelbaren Zusammenhang gebracht werden konnte. Durch einen erfindungsgemäßen Lötkopf wird das Heißgas im Lötkopf derart vergleichmäßigt, daß an allen Anschlußbeinen eines Bauelementes beim Ein- und beim Auslöten zur gleichen Zeit annähernd die gleiche Temperatur herrscht.

Weitere vorteilhafte Ausgestaltungen der Erfindung sind den Ansprüchen 2 bis 5 zu entnehmen.

In Kombination mit der Vergleichmäßigung des Heißgasstromes läßt sich die Zuverlässigkeit der Temperaturregelung dadurch erhöhen, daß ein Thermoelement eingesetzt wird, welches innerhalb des Lötkopfes derart plaziert ist, daß es unmittelbar, d.h. ca. 1 bis 2 mm vor den Anschlußbeinen eines Bauelementes, welches über den Lötkopf beheizt wird, zum Liegen kommen.

Eine Ausführung einer Einrichtung zur Vergleichmäßigung des Heißgases wird durch eine Wirbeldüse dargestellt, die in der Heißgaszuführung sitzt. Eine weitere bessere Ausführung, die gleichzeitig mit der Wirbeldüse eingesetzt werden kann, ist ein den äußeren Formen des Bauelementes angepaßter am oder im Lötkopf umlaufender Kanal, der eine schlitzförmige Düse aufweist, die längs des Kanals verläuft und in Richtung der Anschlußbeine der Bauelemente zeigt, also das Heißgas direkt und gleichmäßig auf die Anschlußbeine leitet.

Die Wichtigkeit dieser beiden Maßnahmen, nämlich die Vergleichmäßigung des Heißgases und die Temperaturmessung unmittelbar vor dem Ort der Lötung werden durch einen einfachen Vergleich sichtbar. So ist als Pheripheriegerät z.B. eine Heizung nötig, die das Heißgas auf bis zu 860° C aufheizt, wohingegen am Ort der Lötung Temperaturen bis ca. 250° C auftreten. Die Gründe dafür sind zum einen die Temperaturverluste innerhalb der Heißgaszuführung, da sehr viele metallische Bauteile eingesetzt werden und zum anderen die instationäre Betriebsweise des gesamten Systemes. Diese instationäre Fahrweise ist jedoch zur Verkürzung der gesamten Arbeitszeiten beim Aus- oder Einlöten nötig. So muß z.B. bei insgesamt noch kalter Apparatur die Heizung eine wesentliche Temperaturüberhöhung bereitstellen, damit am Ort der Lötung die nötige Energie und Temperatur zur Verfügung steht. Nach mehreren Arbeitstakten und mittlerweile warmer Apparatur ist diese Temperaturüberhöhung von der Heizung her nicht mehr in dem anfänglichen Ausmaß notwendig. Gerade dies erfordert den oben beschriebenen Einsatz des Thermoelementes, dessen Meßwert der Regelung zugeführt wird, unmittelbar vor den Anschlußbeinen der Bauelemente, wobei an allen Anschlußbeinen durch die oben beschriebenen konstruktiven Maßnahmen annähernd die gleiche Temperatur bereitgestellt wird.

Im folgenden wird anhand der schematischen Figuren ein Ausführungsbeispiel beschrieben.
- Fig. 1: zeigt eine Gesamtübersicht einer Ein- oder Auslötmaschine
- Fig. 2: zeigt eine detailliertere Darstellung des Lötkopfes 1 mit Wirbeldüse 32 und Thermoelement 31
- Fig. 3: zeigt eine detaillierte Darstellung einer weiteren Ausführung des Lötkopfes 1 mit einem umlaufenden Heißgaskanal 33 und einer Wirbeldüse 32.

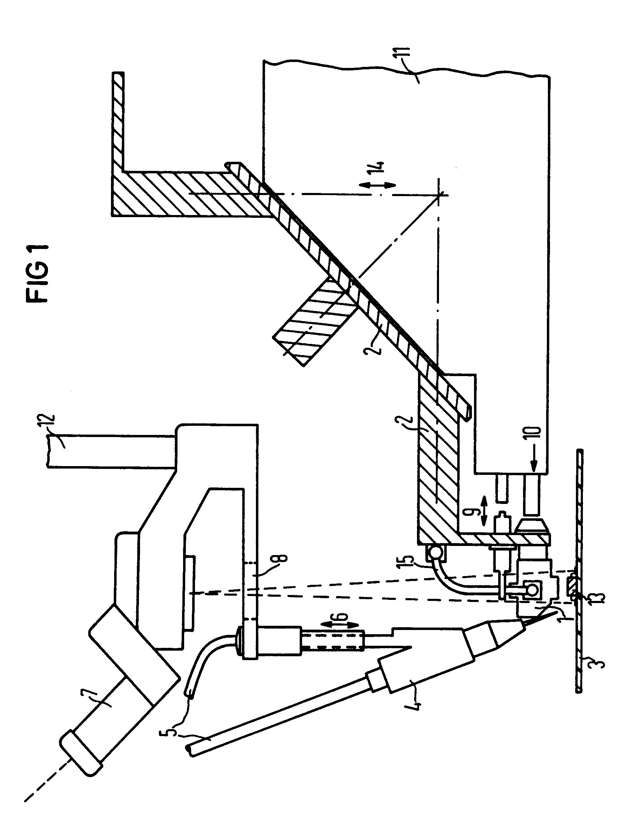

In Fig. 1 ist schematisch eine Ein- oder Auslötmaschine dargestellt. Sie enthält folgende wesentlichen Teile:
- den Lötkopf 1
- den Drehteller 2
- die Leiterplatte 3
- ein SMD-Bauelement 13
- eine Dosiervorrichtung 4 für Lotpaste mit
- Druckluftanschluß 5 und
- Hubzylinder 6, sowie
- Sichtfenster 8
- eine Optik 7, hier ein Mikroskop
- eine Stativ 12 für Optik 7 und Dosiervorrichtung 4
- ein Stativ 11 für den Drehteller 2 mit
- einer Hubeinrichtung 14
- eine Vakuumleitung 15
- einen Hubzylinder 9
- eine Heißgaszuführung 10.

Der am Drehteller 2 über eine Auslegearm befestigte Lötkopf 1 ist in seiner Arbeitsstellung derart positioniert und arretiert, daß mittels der Optik 7 das SMD-Bauelement 13 von oben durch das Sichtfenster 8 und durch den Lötkopf hindurch betrachtet werden kann. Durch Drehen des Drehtellers 2 können verschiedene an ihm über Auslegearme befestigt Lötköpfe bereit gestellt und in Arbeitsposition geschwenkt werden. Dargestellt ist lediglich ein zweiter Auslegearm, der jedoch nicht mit einem Lötkopf 1 versehen ist. Zum Ein- oder Auslöten wird über die Heißgaszuführung 10 dem Lötkopf 1 ein Heißgas zugeführt, daß im Lötkopf 1 auf die Anschlußbeine des SMD-Bauteils 13 geleitet wird und diese auf die nötige Löttemperatur von beispielsweise 210° oder 225°C erhitzt. Über den Hubzylinder 9 werden die im Lötkopf 1 enthaltenen Zentrierbacken betätigt, die das SMD-Bauelement 13 zeitweise zentrieren und festhalten. Eine weitere Halterung des SMD-Bauelementes 13 am Lötkopf 1 ist durch eine Vakuumeinrichtung gegeben, die über eine Vakuumleitung 15 versorgt wird. Die exakte Positionierung des Lötkopfes 1 relativ zu dem SMD-Bauelement 13 geschieht zum einen durch die in x/y-Richtung mögliche Verschiebung der Leiterplatte 3, sowie über die Hubeinrichtung 14, die den Lötkopf bezüglich der Höhe einstellt. Die Dosiervorrichtung 4 wird über die Druckluftanschlüsse 5 versorgt und durch den Hubzylinder 6 zum Aufbringen einer genau dosierten Menge von Lotpaste auf die Leiterplatte senkrecht nach oben oder nach unten bewegt. Auch hier ermöglicht die Optik 7 zusammen mit der senkrechten Betrachtungsweise durch den Lötkopf 1 hindurch eine parallexen freie Betrachung des Ein- oder Auslötplatzes. Hierzu sind durch die Optik 7 in der Regel die Anschlußbeine des SMD-Bauteiles 13 sichtbar. Der zentral sitzende Körper des SMD-Bauteiles 13 ist durch die Vakuumeinrichtung verdeckt, die das Bauteil zeitweise hält.

Eine derartige Ein- oder Auslötmaschine für SMD-Bauteile 13 ist durch den Einsatz von Computerprogrammen automatisierbar. Hierzu sind drei wesentliche Arbeitsschritte zu benennen - das Auslöten, das Dosieren der Lotpaste, das Einlöten eines neuen SMD-Bauteiles.

Der Ablauf ist wie folgt:

### Auslöten

Über eine Grobjustierung wird der Lötkopf 1 ca. 20 mm über das SMD-Bauteil 13 gefahren und anschließend über eine Feinjustierung auf ca. 1 bis 2 mm angenähert und in x/y-Richtung ausgerichtet, so daß er direkt über dem Bauteil steht. Mittels des über den Lötkopf geführten Heißgases 10 werden die Anschlußbeine des SMD-Bauelementes 13 von Raumtemperatur mit einer Geschwindigkeit von etwa 1,5° C pro Sekunde bis auf ca. 200° C aufgeheizt. Anschließend wird der Lötkopf 1 auf das Bauelement 13 abgesetzt und das Vakuum eingeschaltet, wodurch das Bauelement am Lötkopf angesaugt und gehalten wird. Während des nun einsetzenden eigentlichen Auslötprozesses wird innerhalb von 5 bis 15 Sekunden die Temperatur von 200 bis 210° C oder beispielsweise 225° C erhöht und das Lot zum Fließen gebracht. Der Lötkopf hebt anschließend mit dem Bauelement ab. Die angegebenen Zahlenwerte beziehen sich auf den Einsatz einer üblichen Lotpaste.

### Dosieren

Bei in Arbeitsposition eingeschwenktem oder auch ausgeschwenktem Lötkopf 1 wird über die Dosiervorrichtung 4 eine exakt dosierte Menge Lotpaste auf die Anschlußflecken auf der Leiterplatte 3 aufgebracht. Dazu wird die Dosiervorrichtung 4 bis auf einen Abstand von ca. 1 bis 2 mm zur Leiterplatte 3 abgesenkt. Der Hubzylinder 6 sorgt für das Absenken einer Dosiernadel der Dosiervorrichtung 4. Die Menge der notwendigen Lotpaste kann über den Druck in der Druckluftzuführung 5, über die Zeit oder über den Durchmesserr der Dosiernadel gesteuert werden.

### Einlöten

Das Einlöten geschieht in entsprechender Weise wie das Auslöten. Das SMD-Bauelement 13 wird von dem Lötkopf 1 aufgenommen, mittels Zentrierbacken zentriert und über ein Vakuum festgehalten. Die Zentrierbacken sind in diesem Zustand wieder gelöst. Nach einer Grobpositionierung erfolgt das Absenken auf die Leiterplatte und die Feinjustierung, wobei mit der Optik 7 kontrolliert wird. Innerhalb der ersten Phase des Aufheizens wird wiederum mit einer Geschwindigkeit von ca. 1,5° C pro Sekunde bis auf ca. 200° C vorgeheizt und beispielsweise beim Einsatz einer handelsüblichen Lotpaste innerhalb von weiteren 5 bis 15 Sekunden auf ca. 225° C erhitzt. Die Halterung durch Ansaugen mittels Vakuum wird anschließend abgeschaltet, wobei gleichzeitig, um eine Nacherhitzung des Körpers der SMD-Bauteile 13 zu vermeiden, etwa 10 Sekunden lang kalte Luft direkt über die Vakuumleitung auf das SMD-Bauelement geblasen wird. Der Lötkopf 1 hebt nun ab und der Einlötvorgang ist beendet.

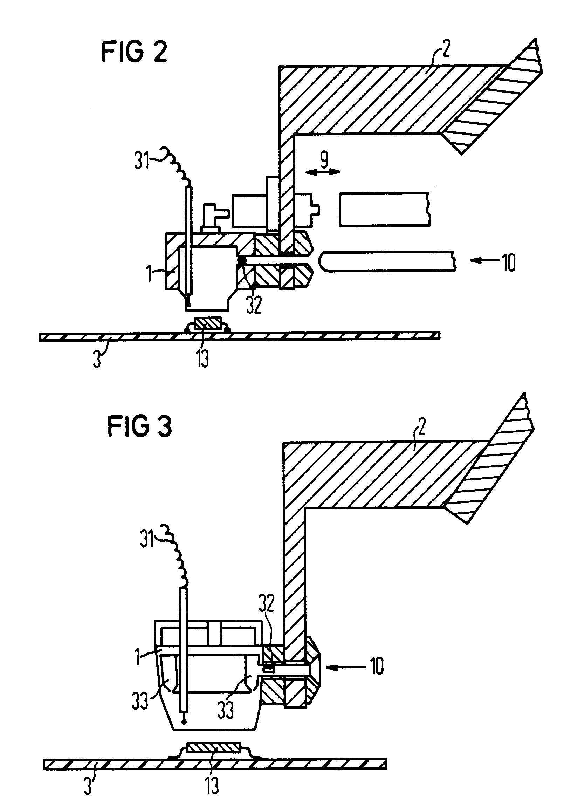

In Fig. 2 ist der Lötkopf 1 in Arbeitsstellung direkt über dem SMD-Bauelement 13, welches auf der Leiterplatte 3 befestigt ist sichtbar. Weiterhin sind der Auslegearm von Drehteller 2, die Hubbewegung über den Hubzylinder 9 für die Zentrierbacken am Lötkopf 1, sowie die Heißgaszuführung 10 angedeutet. Innerhalb der Heißgaszuführung ist die Wirbeldüse 32 plaziert, die für eine Vergleichmäßigung des Heißgasstromes sorgt. Das Thermoelement 31 wird soweit in den Lötkopf 1 hineingeführt, daß es während einer Beheizung der Lötung mittels Heißgas durch den Lötkopf unmittelbar vor der Lötung zum Liegen kommt. Dieser Abstand beträgt ca. 1,5 mm.

In Fig. 3 ist eine weitere Ausführung des Lötkopfes skizziert, wobei wiederum ein Thermoelement wie schon beschrieben plaziert wird, eine Wirbeldüse 32 in der Heißgaszuführung eingesetzt wird und zudem zur Vergleichmäßigung des Heißgases ein den äußeren Konturen der Bauelemente entsprechender umlaufender Kanal im Lötkopf 1 eingebaut ist, der eine in Richtung der Anschlußbeine des Bauteiles 13 zeigende schlitzförmige Düse aufweist.

Zur Verdeutlichung muß erwähnt werden, daß die am Lötkopf 1 eingesetzten Zentrierbacken während jeder Phase der Beheizung mittels Heißgas geöffnet sind. Während der Beheizung hat der Lötkopf entweder einen kleinen vertikalen Abstand von 1 bis 2 mm mm zum Bauteil oder der Lötkopf hält das Bauelement durch eine Ansaugvorrichtung mittels Vakuum. Als Heißgas kann Luft eingesetzt werden, genauso lassen sich jedoch inerte Gase wie z.B. Stickstoff verwenden.

Die im umlaufenden Kanal angeordnete schlitzförmige Düse läßt sich ebenso in Form von aneinander gereihten Bohrungen ausführen.

## Patentansprüche

1. Lötkopf (1) zum Ein- und Auslöten von Bauelementen (13), insbesondere für oberflächenmontierbare Bauelemente, mit
- einer Beheizung von Anschlußbeinen der Bauelemente (13) mittels Heißgas, wobei das Heißgas auf die Anschlußbeine gerichtet und durch den Lötkopf (1) hindurchgeführt ist, gekennzeichnet durch
- eine am Eintritt des Heißgases in den Lötkopf (1) plazierte Wirbeldüse (32) zur Vergleichmäßigung des Heißgases und
- eine Temperaturregelung für das Heißgas mittels eines Thermoelementes (31), das am Austritt des Heißgasstromes aus dem Lötkopf (1) in der Randzone des Heißgasstromes angebracht ist und somit die an den Anschlußbeinen der Bauelemente (13) unmittelbar anliegende Temperatur meßbar ist.

2. Lötkopf (1) nach Anspruch 1,
**dadurch gekennzeichnet,**
daß am Lötkopf (1) zur Führung und Vergleichmäßigung des Heißgases ein umlaufender Kanal (33) entsprechend der äußeren Kontur der Bauelemente (13) vorhanden ist, der eine schlitzförmige Düse aufweist, die längs des Kanales (33) verläuft und in Richtung der Anschlußbeine der Bauelemente (13) zeigt.

## Claims

1. Soldering head (1) for soldering in and desoldering components (13), especially surface-mounted components, having
- heating of connecting legs of the components (13) by means of hot gas, the hot gas being directed onto the connecting legs and being passed through the soldering head (1), characterised by
- a vortex nozzle (32), which is placed on the inlet of the hot gas into the soldering head (1), for making the hot gas uniform, and
- temperature control for the hot gas by means of a thermal element (31), which is fitted at the outlet of the hot gas flow from the soldering head (1) in the edge zone of the hot gas flow, and the temperature which is directly present on the connecting legs of the components (13) can thus be measured.

2. Soldering head (1) according to Claim 1, characterised in that there is a circumferential channel (33) on the soldering head (1), for guiding the hot gas and making it uniform, which channel (33) corresponds to the external contour of the components (13) and has a nozzle which is in the form of a slot, runs along the channel (33) and points in the direction of the connecting legs of the components (13).

## Revendications

1. Tête de brasage (1) pour souder et pour dessouder des composants (13), notamment des composants montés en surface, comportant :
- un chauffage des pattes de reccordement des composants (13) au moyen de gaz chaud, le gaz chaud étant dirigé sur les pattes de raccordement et passant dans la tête de brasage (1), caractérisé
- par une buse (32) de tourbillonnement placée à l'entrée du gaz chaud dans la tête de brasage (1) et destinée à uniformiser le gaz chaud, et
- une régulation de température pour le gaz chaud au moyen d'un thermocouple (31) qui est monté à la sortie du courant de gaz chaud de la tête de brasage (1) dans la zone marginale du courant de gaz chaud et qui permet ainsi de mesurer la température appliquée directement aux pattes de raccordement des composants (13).

2. Tête de brasage (1) suivant la revendication 1,
caractérisée,
en ce qu'il est prévu, sur la tête de brasage (1), pour guider et pour uniformiser le gaz chaud, un canal (33) faisant tout le tour qui correspond au contour extérieur des composants (13) et qui présente une buse en forme de fente qui s'étend le long du canal (33) et qui est dirigée sur les pattes de raccordement des composants (13).
